# EUROPÄISCHE PATENTSCHRIFT

(11) **EP 0 745 141 B1**
(45) Veröffentlichungstag und Bekanntmachung des Hinweises auf die Patenterteilung: **19.11.1997**
(21) Anmeldenummer: 95908266.0
(22) Anmeldetag: 06.02.1995
(51) Int. Cl.: C14C 9/00, C08L 83/06

(54) **VERFAHREN ZUM HYDROPHOBIEREN VON LEDER UND PELZFELLEN MIT KAMMARTIG CARBOXYLFUNKTIONALISIERTEN POLYSILOXANEN**
WATER-PROOFING PROCESS FOR LEATHERS AND PELTS BY COMB-LIKE CARBOXYLATED POLYSILOXANES
PROCEDE D'IMPERMEABILISATION DE CUIRS ET DE PEAUX AVEC DES POLYSILOXANES A FONCTION CARBOXYLE ET A STRUCTURE EN PEIGNE

(30) Priorität: 16.02.1994 DE 4404890
(43) Veröffentlichungstag der Anmeldung: 04.12.1996
(73) Patentinhaber: BASF AKTIENGESELLSCHAFT, 67056 Ludwigshafen (DE)
(72) Erfinder: KNEIP, Michael, D-67227 Frankenthal (DE); DANISCH, Peter, D-67065 Ludwigshafen (DE)
(86) Internationale Anmeldenummer: EP9500418
(87) Internationale Veröffentlichungsnummer: WO9522627

(56) Entgegenhaltungen:
- EP-A- 0 205 096
- EP-A- 0 213 480
- EP-A- 0 324 345
- EP-A- 0 556 740

## Beschreibung

Die vorliegende Erfindung betrifft ein verbessertes Verfahren zum Hydrophobieren von Leder und Pelzfellen mit carboxylgruppenhaltigen Polysiloxanen in einer wäßrigen Emulsion in Gegenwart von Emulgatoren. Weiterhin betrifft die Erfindung ein Mittel zum Hydrophobieren von Leder und Pelzfellen in Form einer wäßrigen Emulsion.

Aus der EP-B 213 480 ist ein Verfahren zum Hydrophobieren von Leder und Pelzen unter Verwendung einer wäßrigen Emulsion aus 15 bis 90 Gew.-% Siliconöl, 5 bis 30 Gew.-% einer N-(C₉- bis C₂₀-Acyl)aminosäure als Emulgator und wenigstens 5 bis Rest zu 100 Gew.-% Wasser mit einem pH-Wert von 5 bis 12 bekannt. Als Siliconöl können beispielsweise Dimethylpolysiloxane mit durchschnittlich 2 bis 10 Carboxylgruppen pro Molekül verwendet werden.

Die Gebrauchseigenschaften und die anwendungstechnischen Ergebnisse sind bei derartigen Siliconölemulsionen jedoch nicht optimal. Die Stabilität der Emulsionen, insbesondere bei Lagerung, sowie die Verträglichkeit mit Paraffinemulsionen sind verbesserungsbedürftig. Der hydrophobierende Effekt kann ebenfalls noch verbessert werden. Leichte Beeinträchtigungen der Zurichtung der Leder beim Hydrophobieren mit diesen Mitteln können ebenfalls in einigen Fällen beobachtet werden. Weiterhin sollte die Einsatzmenge an Siliconöl noch weiter abgesenkt werden.

Die hydrophobierende Wirkung der bestehenden Systeme reicht oft für die Anforderungen des Marktes, insbesondere des US-Marktes, nicht aus. Im dort üblichen Maeser-Test werden Flex-Werte >15000 verlangt. Dies ist mit den üblichen Produkten reproduzierbar nicht möglich, so daß in der Praxis oft mit lösungsmittelhaltigen Siliconen nachbehandelt werden muß (Spritz- oder Walzenauftrag). Die lösungsmittelhaltigen Produkte belasten hierbei die Luft. Außerdem erschwert eine oberflächliche Siliconisierung die Zurichtung der Leder, vor allem durch Haftungsprobleme. Als weitere Schwierigkeit kommt hinzu, daß beim Einsatz zu hoher Siliconmengen das erhaltene Leder, z.B. als Oberleder für Schuhe, zu weich wird.

Aufgabe der vorliegenden Erfindung war es daher, Lederhydrophobiermittel mit entsprechend verbesserten Gebrauchseigenschaften und verbesserten anwendungstechnischen Ergebnissen bereitzustellen.

Demgemäß wurde ein Verfahren zum Hydrophobieren von Leder und Pelzfellen mit carboxylgruppenhaltigen Polysiloxanen in einer wäßrigen Emulsion in Gegenwart von Emulgatoren gefunden, welches dadurch gekennzeichnet ist, daß man kammartig carboxylfunktionalisierte Polysiloxane einsetzt, bei denen die Carboxylgruppen über Spacergruppen in Form von linearen oder verzweigten C₂- bis C₄₀-Alkylengruppen, die durch bis zu 8 nicht benachbarte Sauerstoffatome oder Gruppen der Formel -NR¹-, -CO- oder -CO-NR¹- unterbrochen sein und zusätzlich bis zu 5 Carboxylgruppen oder Carbonsäureamidgruppen der Formel -CO-NR¹R² tragen können, wobei die Reste R¹ und R² für Wasserstoff oder C₁- bis C₄-Alkyl stehen, an die Polymerhauptkette gebunden sind, wobei die Spacergruppen über eine direkte Bindung oder über ein Sauerstoffatom oder eine Gruppe der Formel -NR¹-, -CO-, -CO-NR¹- oder -CO-O- mit der Polymerhauptkette verbunden sind.

Die wesentliche Aufgabe dieser Spacergruppe ist es, einen bestimmten Abstand zwischen der Siliconpolymerhauptkette und den "reaktiven" Carboxylgruppen zu schaffen. Die aus Spacergruppen und Carboxylgruppen zusammengesetzten Seitenketten sind gleichsam die "Zinken des Molekülkamms".

Bevorzugt werden für derartige Spacergruppen lineare Polymethylengruppen der Formel -(CH₂)ₘ- mit m - 2 bis 40, insbesondere 5 bis 25, vor allem 8 bis 18, sowie verzweigte, insbesondere nur geringfügig verzweigte, d.h. pro 3 C-Atome im linearen Teil der Kette nur im statistischen Mittel maximal eine Methyl- oder Ethylgruppe aufweisende C₂- bis C₄₀-Alkylengruppen, insbesondere C₅- bis C₂₅-Alkylengruppen, vor allem C₈- bis C₁₈-Alkylengruppen.

Ein Teil oder die Gesamtheit der Spacergruppe kann aus Polyoxyalkyleneinheiten, beispielsweise Polyoxyethyleneinheiten, bestehen. Ebenso können hierzu analoge Polyazaalkyleneinheiten auftreten, bei denen die Kohlenstoffkette durch -NH-, -N(CH₃)-, -N(C₂H₅)-, -N(C₃H₇)- oder -N(C₄H₉)- unterbrochen ist. Auch können unterbrechende Carbonsäureamidgruppierungen wie -CO-NH- oder -CO-N(CH₃)-auftreten. Die Anzahl der unterbrechenden Heteroatome oder Heteroatomgruppierungen kann bis zu 8, insbesondere bis zu 5, vor allem bis zu 3 betragen.

Weiterhin können die Spacergruppen selbst als Substituenten weitere Carboxylgruppen oder auch Carbonsäureamidreste wie -CO-NH₂ oder -CO-N(CH₃)₂ tragen. Die Anzahl solcher Substituenten kann bis zu 5, insbesondere bis zu 3, vor allem bis zu einem betragen.

Die Variable Z, die die Verknüpfung zwischen Spacergruppe und Polymerhauptkette darstellt, bedeutet vor allem eine direkte Bindung oder ein Sauerstoffatom, daneben aber auch eine Carbonyl-, eine Carbonsäureamid-, z.B. -CO-NH- oder -CO-N(CH₃)-, oder eine Carbonsäureester-Funktion. Im Fall von Carbonsäureamid- und Carbonsäureester-Funktionen kann das Carbonyl-Kohlenstoffatom sowohl an die Polymerhauptkette als auch an die Spacergruppe gebunden sein.

Unter Polysiloxanen sollen solche Polymeren verstanden werden, die in der Hauptkette wiederkehrende Si-O-Si-Einheiten aufweisen. Die verbleibenden Valenzen (mit Ausnahme der -Z-A-COOH-Seitenketten) sind normalerweise durch Wasserstoff, Hydroxyl, C₁- bis C₄-Alkyl, Phenyl, C₁- bis C₄-Alkoxy, Amino, Mono-C₁- bis C₄-Alkylamino, Di-C₁- bis C₄-alkylamino, Chlor oder Fluor abgesättigt. In den meisten Fällen treten hiervon C₁- bis C₄-Alkyl, insbesondere C₁- bis C₃-Alkyl, vor allem Methyl, und daneben noch Phenyl auf.

Meist liegen herstellungsbedingte Mischungen verschiedener Strukturtypen von Polysiloxanen vor: kettenpolymere Siloxane (meist Hauptkomponenten der Mischungen), verzweigte Siloxane, cyclische Siloxane und vernetzte Siloxane. Übliche Molekulargewichte für Polysiloxane liegen bei 5000 bis 150 000.

In einer bevorzugten Ausführungsform des erfindungsgemäßen Lederhydrophobierverfahrens setzt man als kammartig carboxylfunktionalisierte Polysiloxane solche ein, deren Hauptkomponente eine Struktur der allgemeinen Formel I 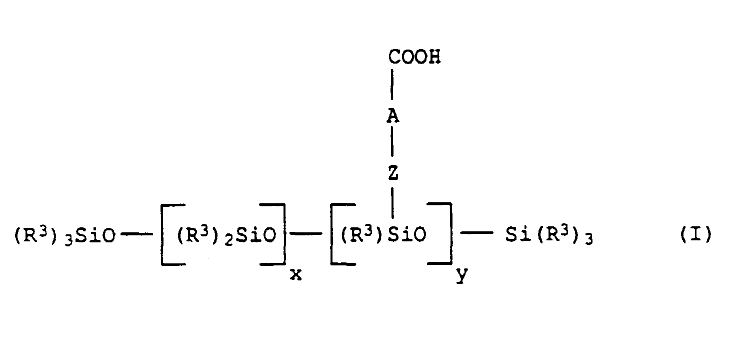 in der
die Reste R³ gleich oder verschieden sind und unabhängig voneinander für Wasserstoff, Hydroxyl, C₁- bis C₄-Alkyl, Phenyl, C₁- bis C₄-Alkoxy, Amino, Mono-C₁- bis C₄-alkylamino, Di-C₁- bis C₄-alkylamino, Chlor oder Fluor stehen, wobei an den Kettenenden jeweils auch ein Rest R³ für die Gruppierung -Z-A-COOH stehen kann,
die Variable A eine lineare oder verzweigte C₅- bis C₂₅-Alkylengruppe bezeichnet,
die Variable Z eine direkte Bindung, ein Sauerstoffatom oder eine Gruppe der Formel -NR¹-, -CO-, -CO-NR¹- oder -CO-O- bedeutet, wobei R¹ für Wasserstoff oder C₁- bis C₄-Alkyl steht, und
die Indices x und y der zugehörigen statistisch verteilten Struktureinheiten in der Summe 50 bis 200 ergeben, wobei pro Molekül I im statistischen Mittel 1 bis 50, insbesondere 2 bis 20, vor allem 2,5 bis 15 Carboxylgruppen vorhanden sind,
aufweist.

Besonders bevorzugt werden solche Polysiloxane I eingesetzt, bei denen die Summe aus x und y 100 bis 500, insbesondere 120 bis 300, beträgt, wobei das Verhältnis der Indices x zu y bei 99:1 bis 9:1 liegt.

Von besonderem Interesse sind weiterhin Polysiloxane I, bei denen die Reste R³ für C₁- bis C₃-Alkyl, insbesondere Methyl, stehen.

Die Carboxylgruppen können sowohl als freie Carbonsäuren als auch in partieller oder vollständiger Salzform, beispielsweise als Alkalimetallsalze wie Natrium- oder Kaliumsalze, als Ammoniumsalze oder als Aminsalze, vorliegen.

Das erfindungsgemäße Lederhydrophobierverfahren läßt sich besonders gut durchführen, wenn die wäßrige Emulsion der Polysiloxane zusätzlich Paraffine, welche fest und/oder flüssig sein können, beispielsweise solche mit einem Schmelzpunkt von 20 bis 100°C, Paraffinöle oder Weißöle, Mineralölen, natürliche Fette oder natürliche Öle, beispielsweise Fischtran oder Knochenöl, oder synthetische oder natürliche Wachse, beispielsweise Polyethylenwachse, Polyisobutylenwachse, Bienenwachs oder Karnaubawachs, normalerweise in einer Menge von bis zu 90 Gew.-%, insbesondere bis zu 50 Gew.-%, vor allem bis zu 30 Gew.-%, enthält.

Als Emulgatoren eignen sich im Prinzip alle in wäßrigen Systemen oberflächenaktive Verbindungen nichtionischen, anionischen, kationischen oder amphoteren Charakters, die die eingesetzten Polysiloxane sowie Paraffine, Paraffinöle, Fette, Öle und Wachse ausreichend emulgieren und die Hydrophobierung nicht beeinträchtigen, insbesondere jedoch N-(C₉- bis C₂₀-Acyl)aminosäuren mit 2 bis 6 C-Atomen im Aminosäuregrundkörper wie N-Oleoylsarkosin, N-Stearoylsarkosin, N-Lauroylsarkosin oder N-Isononanoylsarkosin; letztere liegen zumeist in Form ihrer Alkalimetall-, Ammonium- oder Trialkanolaminsalze vor. Die Polysiloxan-Emulsion enthält üblicherweise 3 bis 30 Gew.-%, insbesondere 5 bis 25 Gew.-%, vor allem 7 bis 18 Gew.-% Emulgatoren, wobei auch Mischungen der genannten Emulgatoren eingesetzt werden können.

Die beschriebenen Polysiloxan-Emulsionen enthalten üblicherweise 3 bis 90 Gew.-%, insbesondere 5 bis 60 Gew.-%, vor allem 7 bis 40 Gew.-% kammartig carboxylfunktionalisierte Polysiloxane. Die Emulsionen werden normalerweise in Mengen von 0,1 bis 20 Gew.-%, insbesondere 0,5 bis 15 Gew.-%, bezogen auf das Falzgewicht des Leders bzw. das Naßgewicht der Pelze, eingesetzt. Es kann empfehlenswert sein, die beschriebenen Emulsionen (Konzentrate) im Verhältnis von 1:2 bis 1:5 mit Wasser zu verdünnen und der Arbeitsflotte bei der Lederhydrophbierung zuzugeben.

Die erfindungsgemäße Hydrophobierung kann einstufig oder auch zweistufig während und nach der Nachgerbung erfolgen. Zweckmäßige Gerbstoffe für die Nachgerbung sind vegetabilische Gerbstoffe und synthetische Gerbstoffe, beispielsweise auf der Basis von Phenolsulfonsäure-Formaldehyd-Kondensaten. Als Farbstoffe, die gleichzeitig mitverwendet werden können, kommen beispielsweise die üblicherweise verwendeten sauren, substantiven oder basischen Anilinfarbstoffe in Betracht.

Die eigentliche erfindungsgemäße Hydrophobierung während oder nach der Nachgerbung erfolgt in der Regel unter Walken in einer geeigneten Vorrichtung in an sich üblicher Weise, d.h. bei Flottenlängen von 50 bis 2000 %, bevorzugt 100 bis 400 %, bezogen auf das Falzgewicht des Leders oder Naßgewicht der Pelze, Temperaturen von 20 bis 60°C, bevorzugt 35 bis 50°C, wobei zu Beginn die pH-Werte in der Regel zwischen 4,5 und 8,0, bevorzugt 4,8 bis 5,5, liegen. Im allgemeinen ist die Hydrophobierung in einer Zeit von 20 bis 240, bevorzugt 30 bis 120 Minuten, beendet.

Am Ende der Hydrophobierung wird der Emulgator üblicherweise mit Säure, bevorzugt Ameisensäure, fixiert, indem ein pH-Wert von 3,0 bis 5,0, bevorzugt 3,8 bis 4,0, eingestellt wird.

5 Die Wirkung der Hydrophobierung kann durch eine Nachbehandlung mit einem in der Gerberei üblichen zwei-, drei- oder vierwertigen Metallsalz, insbesondere mit einem basischen Chromsulfat, mit Aluminiumsulfat, Zirkonsulfat, Titansulfat, Calciumchlorid oder Magnesiumsulfat, verstärkt werden. Von den genannten Salzen werden zweckmäßigerweise, bezogen auf das Falzgewicht des Leders oder Naßgewicht der Pelze, 0,5 bis 5 Gew.-%, bevorzugt 1 bis 2 Gew.-%, eingesetzt. Von den angegebenen Salzen sind basische Chromsulfate und Aluminiumsulfat bevorzugt.

Gegenstand der vorliegenden Anmeldung sind auch Mittel zum Hydrophobieren von Leder und Pelzfellen in Form einer wäßrigen Emulsion, gekennzeichnet durch einen Gehalt an kammartig carboxylfunktionalisierten Polysiloxanen, bei denen die Carboxylgruppen über Spacergruppen in Form von linearen oder verzweigten C₂- bis C₄₀-Alkylengruppen, die durch bis zu 8 nicht benachbarte Sauerstoffatome oder Gruppen der Formel -NR¹-, -CO- oder -CO-NR¹- unterbrochen sein und zusätzlich bis zu 5 Carboxylgruppen oder Carbonsäureamidgruppen der Formel -CO-NR¹R² tragen können, wobei die Reste R¹ und R² für Wasserstoff oder C₁ bis C₄-Alkyl stehen, an die Polymerhauptkette gebunden sind, wobei die Spacergruppen über eine direkte Bindung oder über ein Sauerstoffatom oder eine Gruppe der Formel -NR¹-, -CO-, -CO-NR¹- oder -CO-O- mit der Polymerhauptkette verbunden sind.

Ein bevorzugtes derartiges Mittel enthält, bezogen auf die Menge der wäßrigen Emulsion,

| | |
|---|---|
| 3 bis 90 Gew.-% | an kammartig carboxyfunktionalisierten Polysiloxanen, |
| 3 bis 30 Gew.-% | an Emulgatoren und |
| 0 bis 50 Gew.-% | an Paraffinen, Paraffinölen oder Weißölen, Mineralölen, natürlichen Fetten oder natürlichen Ölen oder synthetischen oder natürlichen Wachsen. |

Es ist ein wesentlicher Vorteil der vorliegenden Erfindung, daß man in der Regel mit geringeren Mengen an kammartig carboxylfunktionalisierten Polysiloxanen als bei den aus dem Stand der Technik bekannten Polysiloxane enthaltenden Hydrophobiermitteln schon ausreichende Hydrophobiereffekte erzielt.

Auch arbeitet das vorliegende Hydrophobierverfahren ohne organische Lösungsmittel auf rein wäßriger Basis.

Man erhält lagerstabile Emulsionen auch bei Mitverwendung von Paraffinen oder Mineralölen. Der lipophile Spacer verbessert ebenfalls die Verträglichkeit mit der Paraffin-Emulsion, da die Zugabe "normaler" Silikonöle zu einer stabilen Paraffin/Mineralöl-Emulsion in der Regel zur Trennung der Emulsion führt. Mit den hier beschriebenen Polysiloxanen erhält man auch bei höheren Mengenanteilen eine stabile Emulsion. Dies zeigt sich unter anderem daran, daß sich das Silikonöl einfach zur Paraffin-Emulsion einrühren läßt. Ein nochmaliger Homogenisierschritt ist für die Emulsionsherstellung nicht unbedingt nötig. Dadurch ist es auch nicht notwendig, durch Viskositätserhöhung (z.B. durch Verdikkungsmittel) das Produkt lagerstabil zu machen, so daß es in flüssiger, pumpbarer Form anwenderfreundlich vorliegt.

Durch die Verwendung der beschriebenen kammartig carboxylfunktionalisierten Polysiloxane wird die Zurichtung, d.h. Oberflächenveredlung der Leder, deutlich weniger oder meist sogar nur unmerklich beeinflußt, da das Polysiloxan besser im Lederquerschnitt verteilt wird.

Die hydrophobierende Wirkung der beschriebenen kammartig carboxylfunktionalisierten Polysiloxane ist gegenüber Polysiloxane enthaltenden Hydrophobiermitteln aus dem Stand der Technik deutlich verbessert.

### Beispiele

### Herstellung von erfindungsgemäß zu verwendenden Polysiloxan-Emulsionen

Durch langsame Zugabe unter Rühren der entsprechenden Mengen an Polysiloxan (Viskosität: ca. 600 mm²/s) der statistischen Formel Ia 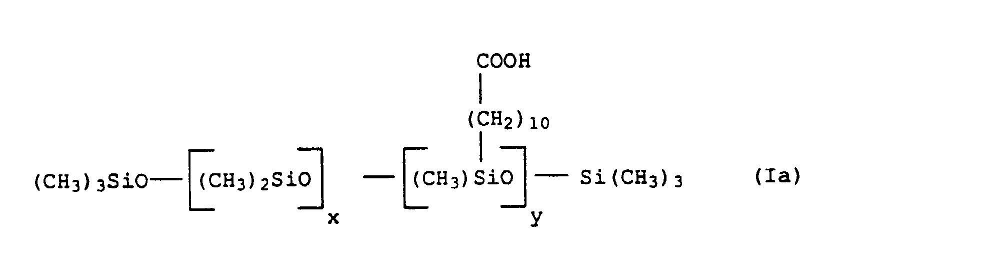 in der die Summe aus x und y ca. 140 bis 150 beträgt und y einen Wert von ca. 3 hat, zu einer handelsüblichen schwach wäßrig-alkalischen Paraffingatsch(36/38°C)-Weißöl-N-Oleoylsarkosin-Emulsion wurden ein 5 gew.-%ige (Emulsion 1) und eine 10 gew.-%ige Polysiloxan Ia-Dispersion (Emulsion 2) hergestellt.

Direkt beim Zusammenrühren entstehen stabile homogene Emulsionen, so daß eine anschließende Homogenisierung, z.B. mit einem Spalthomogenisator, nicht mehr erforderlich ist. Man kann die oben angegebenen Komponenten auch einzeln zusammengeben, ohne daß sich an den Gebrauchs- oder anwendungstechnischen Eigenschaften etwas ändert.

### Anwendungstechnische Prüfungen

Chromgegerbte Rindleder (wetblues) mit 2 mm Falzstärke, die auf einen pH-Wert von 5 entsäuert worden waren, wurden, jeweils auf das Falzgewicht bezogen, mit 4 Gew.-% handelsüblichem Mimosaextrakt, 4 Gew.-% eines handelsüblichen synthetischen Gerbstoffs auf Basis Phenolsulfonsäure-Formaldehyd-Kondensat, 3 Gew.-% eines handelüblichen Polymergerbstoffs und 2 Gew.-% eines handelsüblichen Lederfarbstoffs 90 Minuten lang im Gerbfaß gewalkt.

Anschließend wurde mit jeweils 8 Gew.-%, bezogen auf das Falzgewicht, der hydrophobierenden Emulsion aus Beispiel 1 bzw. Beispiel 2 90 Minuten lang gewalkt und die Arbeitsflotte von 100 % mit Ameisensäure auf einen pH-Wert von 3,8 abgesäuert und anschließend gewaschen. Zum Schluß erfolgte eine Mineralsalzfixierung mit 3 Gew.-% eines handelsüblichen Chromgerbstoffs für 90 Minuten im Gerbfaß.

Die Leder wurden gewaschen, mechanisch ausgereckt und getrocknet. Die erhaltenen Leder waren weich und hatten einen angenehmen Griff und ließen sich gut zurichten.

Zum Vergleich wurde das gleiche gegerbte und gefärbte Leder mit 13 Gew.-% der Emulsion A, bezogen auf das Falzgewicht, in analoger Weise hydrophobiert.

Die Emulsion A wurde durch Zugabe von 11,3 Gew.-% eines üblichen Dimethylpolysiloxans mit 4 direkt an die Siliconpolymerhauptkette gebundenen Carboxylgruppen zu einer handelsüblichen schwach wäßrig-alkalischen Paraffingatsch(36/38°C)-Weißöl-N-OleoylsarkosinEmulsion erhalten.

Während sich die Emulsion A beim Stehen nach 7 Tagen bei 22°C getrennt hatte, waren die Emulsionen 1 und 2 bei 22°C nach 6 Monaten noch stabil.

Die Prüfung der nicht zugerichteten Leder im Bally-Penetrometer (gemäß IUP 10) ergab bei 15 % Stauchung für die Emulsionen 1 und 2 einen Wasseraufnahmewert (nach 24 h) von 16 Gew.-% bzw. 13 Gew.-% und für die Emulsion A einen entsprechenden Wasseraufnahmewert von 19 Gew.-%. In allen 3 Fällen erfolgte nach 24 kein Wasserdurchtritt.

Die Prüfung im Maeser-Test (gemäß ASTM D 2099-70; Prüfung sowohl angerauht als auch nicht angerauht) ergab für die Emulsionen 1 und 2 Flex-Werte von 15 000 bis 30 000 bzw. 20 000 bis >100 000 und für die Emulsion A entsprechende Werte von 5 000 bis 15 000.

Es ist klar zu erkennen, daß bei beiden Anwendungstests die erfindungsgemäß eingesetzten Emulsionen 1 und 2 besser abschneiden, obwohl das kammartig carboxylfunktionalisierte Polysiloxan gegenüber dem üblichen Polysiloxan in geringerer Menge eingesetzt wurde (5 bzw. 10 Gew.-% in Emulsion 1 bzw. 2 gegenüber 11,3 Gew.-% in Emulsion A, wobei zusätzlich bei der Hydrophobierung von Emulsion 1 bzw. 2 nur 8 Gew.-% gegenüber 13 Gew.-% von Emulsion A verwendet wurden).

## Patentansprüche

1. Verfahren zum Hydrophobieren von Leder und Pelzfellen mit carboxylgruppenhaltigen Polysiloxanen in einer wäßrigen Emulsion in Gegenwart von Emulgatoren, dadurch gekennzeichnet, daß man kammartig carboxylfunktionalisierte Polysiloxane einsetzt, bei denen die Carboxylgruppen über Spacergruppen in Form von linearen oder verzweigten C₂- bis C₄₀-Alkylengruppen, die durch bis zu 8 nicht benachbarte Sauerstoffatome oder Gruppen der Formel -NR¹-, -CO- oder -CO-NR¹- unterbrochen sein und zusätzlich bis zu 5 Carboxylgruppen oder Carbonsäureamidgruppen der Formel -CO-NR¹R² tragen können, wobei die Reste R¹ und R² für Wasserstoff oder C₁- bis C₄-Alkyl stehen, an die Polymerhauptkette gebunden sind, wobei die Spacergruppen über eine direkte Bindung oder über ein Sauerstoffatom oder eine Gruppe der Formel -NR¹-, -CO-, -CO-NR¹- oder -CO-O- mit der Polymerhauptkette verbunden sind.

2. Verfahren zum Hydrophobieren von Leder und Pelzfellen nach Anspruch 1, dadurch gekennzeichnet, daß man als kammartig carboxylfunktionalisierte Polysiloxane solche einsetzt, deren Hauptkomponente eine Struktur der allgemeinen Formel I 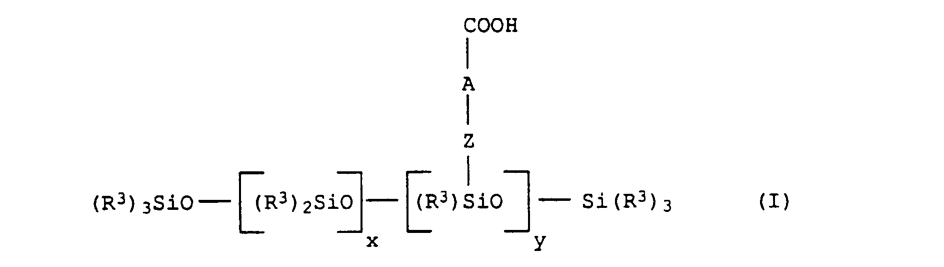 in der
die Reste R³ gleich oder verschieden sind und unabhängig voneinander für Wasserstoff, Hydroxyl, C₁- bis C₄-Alkyl, Phenyl, C₁- bis C₄-Alkoxy, Amino, Mono-C₁- bis C₄-alkylamino, Di-C₁- bis C₄-alkylamino, Chlor oder Fluor stehen, wobei an den Kettenenden jeweils auch ein Rest R³ für die Gruppierung -Z-A-COOH stehen kann,
die Variable A eine lineare oder verzweigte C₅- bis C₂₅-Alkylengruppe bezeichnet,
die Variable Z eine direkte Bindung, ein Sauerstoffatom oder eine Gruppe der Formel -NR¹-, -CO-, -CO-NR¹- oder -CO-O- bedeutet, wobei R¹ für Wasserstoff oder C₁- bis C₄-Alkyl steht, und
die Indices x und y der zugehörigen statistisch verteilten Struktureinheiten in der Summe 50 bis 200 ergeben, wobei pro Molekül I im statistischen Mittel 1 bis 50 Carboxylgruppen vorhanden sind,
aufweist.

3. Verfahren zum Hydrophobieren von Leder und Pelzfellen nach Anspruch 2, dadurch gekennzeichnet, daß man Polysiloxane I einsetzt, bei denen die Summe aus x und y 100 bis 500 beträgt, wobei das Verhältnis der Indices x zu y bei 99:1 bis 9:1 liegt.

4. Verfahren zum Hydrophobieren von Leder und Pelzfellen nach den Ansprüchen 1 bis 3 in Gegenwart von zusätzlich Paraffinen; Paraffinälen oder Weißölen, Mineralölen, natürlichen Fetten oder natürlichen Ölen oder synthetischen oder natürlichen Wachsen.

5. Mittel zum Hydrophobieren von Leder und Pelzfellen in Form einer wäßrigen Emulsion, gekennzeichnet durch einen Gehalt an kammartig carboxylfunktionalisierten Polysiloxanen, bei denen die Carboxylgruppen über Spacergruppen in Form von linearen oder verzweigten C₂- bis C₄₀-Alkylengruppen, die durch bis zu 8 nicht benachbarte Sauerstoffatome oder Gruppen der Formel -NR¹-, -CO- oder -CO-NR¹- unterbrochen sein und zusätzlich bis zu 5 Carboxylgruppen oder Carbonsäureamidgruppen der Formel -CO-NR¹R² tragen können, wobei die Reste R¹ und R² für Wasserstoff oder C₁- bis C₄-Alkyl stehen, an die Polymerhauptkette gebunden sind, wobei die Spacergruppen über eine direkte Bindung oder über ein Sauerstoffatom oder eine Gruppe der Formel -NR¹-, -CO-, -CO-NR¹- oder -CO-O- mit der Polymerhauptkette verbunden sind.

6. Mittel zum Hydrophobieren von Leder und Pelzfellen in Form einer wäßrigen Emulsion nach Anspruch 5, enthaltend
| | |
|---|---|
| 3 bis 90 Gew.-% | an kammartig carboxyfunktionalisierten Polysiloxanen, |
| 3 bis 30 Gew.-% | an Emulgatoren und |
| 0 bis 50 Gew.-% | an Paraffinen, Paraffinölen oder Weißölen, Mineralölen, natürlichen Fetten oder natürlichen Ölen oder synthetischen oder natürlichen Wachsen. |

7. Verwendung von kammartig carboxylfunktionalisierten Polysiloxanen, bei denen die Carboxylgruppen über Spacergruppen in Form von linearen oder verzweigten C₂- bis C₄₀-Alkylengruppen, die durch bis zu 8 nicht benachbarte Sauerstoffatome oder Gruppen der Formel -NR¹-, -CO- oder -CO-NR¹- unterbrochen sein können und zusätzlich bis zu 5 Carboxylgruppen oder Carbonsäureamidgruppen der Formel -CO-NR¹R² tragen können, wobei die Reste R¹ und R² für Wasserstoff oder C₁- bis C₄-Alkyl stehen, an die Polymerhauptkette gebunden sind, wobei die Spacergruppen über eine direkte Bindung oder über ein Sauerstoffatom oder eine Gruppe der Formel -NR¹-, -CO-, -CO-NR¹- oder -CO-O- mit der Polymerhauptkette verbunden sind, in emulgatorhaltigen wäßrigen Emulsionen zum Hydrophobieren von Leder und Pelzfellen.

## Claims

1. Process for the water repellent treatment of leather and skins with carboxyl-containing polysiloxanes in an aqueous emulsion in the presence of emulsifiers, which comprises using polysiloxanes which are functionalized with carboxyl groups in a comb-like manner and in which the carboxyl groups are bonded to the polymer main chain via spacer groups in the form of linear or branched C₂-C₄₀-alkylene groups which may be interrupted by up to 8 non-neighboring oxygen atoms or groups of the formula -NR¹-, -CO- or -CO-NR¹- and in addition may carry up to 5 carboxyl groups or carboxamido groups of the formula -CO-NR¹R², where R¹ and R² are each hydrogen or C₁-C₄-alkyl, the spacer groups being bonded to the polymer main chain via a direct bond or via an oxygen atom or a group of the formula -NR¹-, -CO-, -CO-NR¹- or -CO-O-.

2. A process for the water repellent treatment of leather and skins as claimed in claim 1, wherein a polysiloxane whose main component has a structure of the formula I 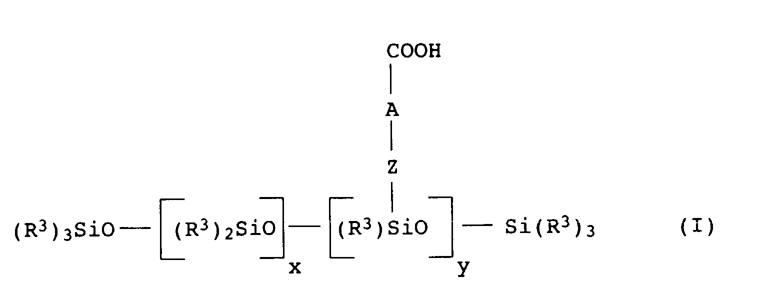 where
the radicals R³ are identical or different and, independently of one another, are each hydrogen, hydroxyl, C₁-C₄-alkyl, phenyl, C₁-C₄-alkoxy, amino, mono-C₁-C₄-alkylamino, di-C₁-C₄-alkylamino, chlorine or fluorine, it also being possible for R³ at each of the chain ends to be a group -Z-A-COOH,
A is linear or branched C₅-C₂₅-alkylene,
Z is a direct bond, an oxygen atom or a group of the formula -NR¹-, -CO-, -CO-NR¹- or -CO-O-, where R¹ is hydrogen or C₁-C₄-alkyl, and
x and y indicate the associated randomly distributed structural units in a total number of from 50 to 200, on average from 1 to 50 carboxyl groups being present per molecule I,
is used as the polysiloxane which is functionalized with carboxyl groups in a comb-like manner.

3. A process for the water repellent treatment of leather and skins as claimed in claim 2, wherein polysiloxanes I in which the sum of x and y is from 100 to 500 are used, the ratio of x to y being from 99:1 to 9:1.

4. A process for the water repellent treatment of leather and skins as claimed in any of claims 1 to 3 in the presence of, in addition, paraffins, liquid paraffins or white oils, mineral oils, natural fats or natural oils or synthetic or natural waxes.

5. An agent for the water repellent treatment of leather and skins in the form of an aqueous emulsion, which comprises a content of polysiloxanes which are functionalized with carboxyl groups in a comb-like manner and in which the carboxyl groups are bonded to the polymer main chain via spacer groups in the form of linear or branched C₂-C₄₀-alkylene groups which may be interrupted by up to 8 non-neighboring oxygen atoms or groups of the formula -NR¹-, -CO- or -CO-NR¹- and in addition may carry up to 5 carboxyl groups or carboxamido groups of the formula -CO-NR¹R²-, where R¹ and R² are each hydrogen or C₁-C₄-alkyl, the spacer groups being bonded to the polymer main chain via a direct bond or via an oxygen atom or a group of the formula -NR¹-, -CO-, -CO-NR¹- or -CO-O-.

6. An agent for the water repellent treatment of leather and skins in the form of an aqueous emulsion as claimed in claim 5, containing
| | |
|---|---|
| from 3 to 90 % by weight | of polysiloxanes functionalized with carboxyl groups in a comb-like manner, |
| from 3 to 30 % by weight | of emulsifiers and |
| from 0 to 50 % by weight | of paraffins, liquid paraffins or white oils, mineral oils, natural fats or natural oils or synthetic or natural waxes. |

7. Use of polysiloxanes which are functionalized with carboxyl groups in a comb-like manner and in which the carboxyl groups are bonded to the polymer main chain via spacer groups in the form of linear or branched C₂-C₄₀-alkylene groups which may be interrupted by up to 8 non-neighboring oxygen atoms or groups of the formula -NR¹-, -CO- or -CO-NR¹- and in addition may carry up to 5 carboxyl groups or carboxamido groups of the formula -CO-NR¹R²-, where R¹ and R² are each hydrogen or C₁-C₄-alkyl, the spacer groups being bonded to the polymer main chain via a direct bond or via an oxygen atom or a group of the formula -NR¹-, -CO-, -CO-NR¹- or -CO-O-, in emulsifier-containing aqueous emulsions for the water repellent treatment of leather and skins.

## Revendications

1. Procédé d'imperméabilisation de cuirs et de peaux avec des polysiloxanes contenant des groupements carboxyle, dans une émulsion aqueuse en présence d'émulsifiants, caractérisé en ce que l'on utilise des polysiloxanes à fonctions carboxyle en forme de peigne, dans lesquels les groupements carboxyle sont liés à la chaîne polymère principale par des groupements écarteurs qui sont des groupements alkylène en C₂-C₄₀ linéaires ou ramifiés, qui peuvent être interrompus par jusqu'à 8 atomes d'oxygène non voisins ou groupements de formule -NR¹-, -CO- ou -CO-NR¹- et qui peuvent porter en plus jusqu'à 5 groupements carboxyle ou amide d'acide carboxylique de formule -CO-NR¹R², où les restes R¹ et R² sont mis pour des atomes d'hydrogène ou des groupements alkyle en C₁-C₄, les groupements écarteurs étant reliés à la chaîne polymère principale par une liaison directe ou par un atome d'oxygène ou par un groupement de formule -NR¹-, -CO-, -CO-NR¹- ou -CO-O-.

2. Procédé d'imperméabilisation de cuirs et de peaux selon la revendication 1, caractérisé en ce que l'on utilise des polysiloxanes à fonctions carboxyle en forme de peigne tels que leur composant principal présente une structure de formule générale I 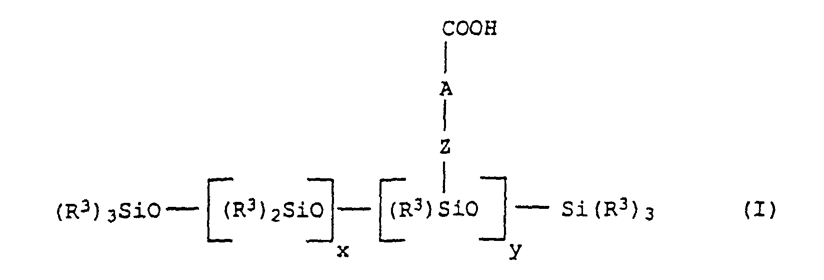 dans laquelle
les restes R³ sont identiques ou différents et sont mis indépendamment les uns des autres pour des atomes d'hydrogène, des groupements hydroxyle, alkyle en C₁-C₄, phényle, alcoxy en C₁-C₄, amino, mono(alkyl en C₁-C₄)amino, di(alkyl en C₁-C₄)amino, des atomes de chlore ou de fluor, un reste R³ à chacune des extrémités de la chaîne pouvant aussi être mis pour un groupement -Z-A-COOH,
la variable A représente un groupement alkylène en C₅-C₂₅ linéaire ou ramifié,
la variable Z représente une liaison directe, un atome d'oxygène ou un groupement de formule -NR¹-, -CO-, -CO-NR¹- ou -CO-O-, où R¹ est mis pour un atome d'hydrogène ou un groupement alkyle en C₁-C₄ et
la somme des indices x et y des motifs de structure correspondants, répartis de façon statistique, vaut 50 à 200, 1 à 50 groupements carboxyle étant présents pour une molécule I à l'état statistique.

3. Procédé d'imperméabilisation de cuirs et de peaux selon la revendication 2, caractérisé en ce que l'on utilise des polysiloxanes I pour lesquels la somme de x et y vaut de 100 à 500, le rapport des indices x à y valant de 99:1 à 9:1.

4. Procédé d'imperméabilisation de cuirs et de peaux selon l'une quelconque des revendications 1 à 3 en présence de paraffines, d'huiles de paraffines ou d'huiles blanches, d'huiles minérales, de graisses naturelles ou d'huiles naturelles ou de cires synthétiques ou naturelles.

5. Milieu d'imperméabilisation de cuirs et de peaux sous forme d'une émulsion aqueuse, caractérisé en ce qu'il contient des polysiloxanes à fonctions carboxyle en forme de peigne, dans lesquels les groupements carboxyle sont liés à la chaîne polymère principale par des groupements écarteurs qui sont des groupements alkylène en C₂-C₄₀ linéaires ou ramifiés, qui peuvent être interrompus par jusqu'à 8 atomes d'oxygène non voisins ou groupements de formule -NR¹-, -CO- ou -CO-NR¹- et qui peuvent porter en plus jusqu'à 5 groupements carboxyle ou amide d'acide carboxylique de formule -CO-NR¹R², où les restes R¹ et R² sont mis pour des atomes d'hydrogène ou des groupements alkyle en C₁-C₄, les groupements écarteurs étant reliés à la chaîne polymère principale par une liaison directe ou par un atome d'oxygène ou par un groupement de formule -NR¹-, -CO-, -CO-NR¹- ou -CO-O-.

6. Milieu d'imperméabilisation de cuirs et de peaux sous forme d'une émulsion aqueuse selon la revendication 5, contenant
3 à 90 % en poids de polysiloxanes à fonction carboxyle en forme de peigne,
3 à 30 % en poids d'émulsifiants et
0 à 50 % en poids de paraffines, d'huiles de paraffines ou d'huiles blanches, d'huiles minérales, de graisses naturelles ou d'huiles naturelles ou de cires synthétiques ou naturelles.

7. Utilisation de polysiloxanes à fonctions carboxyle en forme de peigne, dans lesquels les groupements carboxyle sont liés à la chaîne polymère principale par des groupements écarteurs qui sont des groupements alkylène en C₂-C₄₀ linéaires ou ramifiés, qui peuvent être interrompus par jusqu'à 8 atomes d'oxygène non voisins ou groupements de formule -NR¹-, -CO- ou -CO-NR¹- et qui peuvent porter en plus jusqu'à 5 groupements carboxyle ou amide d'acide carboxylique de formule -CO-NR¹R², où les restes R¹ et R² sont mis pour des atomes d'hydrogène ou des groupements alkyle en C₁-C₄, les groupements écarteurs étant reliés à la chaîne polymère principale par une liaison directe ou par un atome d'oxygène ou par un groupement de formule -NR¹-, -CO-, -CO-NR¹- ou -CO-O-, dans des émulsions aqueuses contenant des émulsifiants, pour l'imperméabilisation de cuirs et de peaux.
